# EUROPEAN PATENT SPECIFICATION

(11) **EP 0 465 240 B1**
(45) Date of publication and mention of the grant of the patent: **21.09.1994**
(21) Application number: 91306047.1
(22) Date of filing: 03.07.1991
(51) Int. Cl.: F02D 21/08, F02M 25/07

(54) **Exhaust gas recirculation**
Abgasrückführung
Recirculation de gaz d'échappement

(30) Priority: 04.07.1990 GB 9014818
(43) Date of publication of application: 08.01.1992
(73) Proprietor: FORD MOTOR COMPANY LIMITED, Brentwood, Essex CM13 3BW (GB); FORD FRANCE S. A., 92506 Rueil-Malmaison Cédex (FR); FORD-WERKE AKTIENGESELLSCHAFT, 50725 Köln (DE)
(72) Inventor: Davies, Cedric Paul, Maldon, Essex (GB); Ewen, Kenneth, Basildon, Essex (GB)
(74) Representative: Messulam, Alec Moses

(56) References cited:
- WO-A-88/01685
- DE-A- 2 365 340
- GB-A- 2 036 174
- US-A- 4 325 348
- US-A- 4 693 225
- PATENT ABSTRACTS OF JAPAN vol. 6, no. 263 (M-181) December 22, 1982 & JP-A-57 157 049 (AISAN KOGYO KK) September 28, 1982

## Description

This invention relates to the field of exhaust gas recirculation, and in particular to a diesel engine with an exhaust gas recirculation system.

A diesel engine of this type is described in WO88/01685. This patent specification describes a diesel engine which has an exhaust gas passage leading from the exhaust side of the engine to the intake side of the engine and with an exhaust gas recirculation valve in the passage.

Exhaust gas recirculation (EGR) is a well known technique which is useful in reducing undesirable emissions, particularly NOₓ, from engine exhausts. The quantity of exhaust gas to be recirculated depends on the speed and load at which the engine is operating, and patent specification WO88/01685 describes one way in which the opening of the exhaust gas recirculation valve can be controlled so that an appropriate volume of exhaust gas is admitted to the engine intake during engine operation (compare with claim 1, 1. part).

In this earlier specification, a throttle valve is placed in the engine intake, and the EGR valve is controlled in accordance with the depression produced on the downstream side of this valve.

The highest volumes of recirculated exhaust gas are normally used when the engine is running fast under a light load. Under these conditions the engine can accept a large volume of recirculated exhaust gas.

There is however one engine operating state which is not catered for by a conventional EGR strategy. This operating state occurs during gear changes. During a gear change, particularly a change to a higher gear, the driver will take his foot off the accelerator pedal at a time when the engine is running fast. When the driver removes his foot in this way the throttle valve in the engine intake will close resulting in a momentary very high vacuum in the intake manifold. This would normally cause the EGR valve to be opened wide so that a high proportion of recirculated gas is drawn into the combustion chambers. As the gear change is completed, the driver again presses the accelerator pedal and this causes the fuel pump to pump a full charge of fuel into a combustion chamber which contains a large proportion of exhaust gas. These two almost simultaneous inputs to the combustion chamber result in a mixture which does not burn well and as a result gear changes are marked by a puff of smoke emitted from the vehicle exhaust.

It is an object of the present invention to avoid the emission of this puff of smoke.

According to the present invention there is provided a diesel engine having an exhaust gas recirculation passage and an exhaust gas recirculation valve in the passage, wherein the opening of the exhaust gas recirculation valve is increased with an increase of the depression produced by an adjustable throttle valve located in the air intake to the engine, wherein the depression acts on the EGR valve to increase the opening of the EGR valve as the depression rises, characterised in that the depression also acts on a bypass valve which is mounted in series with the EGR valve and is set so that it is normally closed but will open to allow the depression to bypass the EGR valve so that the EGR valve moves towards its closed position, when the depression is greater than a predetermined value substantially higher than the depression occurring when the engine is idling and the throttle valve is closed.

An adjustable throttle valve as required here is most commonly used in direct injection diesel engines.

The depression associated with a gear change will normally be greater that 10 kPa and during normal running will normally be below 10 kPa. The bypass valve can therefore be set so that it opens at 10 kPa, but the actual value chosen may vary from engine to engine and can be determined by observing the depression levels encountered in the air intake.

The bypass valve is preferably a diaphragm valve with the diaphragm being normally spring biased against a valve seat in a bypass passage. The bypass passage preferably leads from the source of depression to atmosphere.

The invention will now be further described, by way of example, with reference to the accompanying drawings, in which:

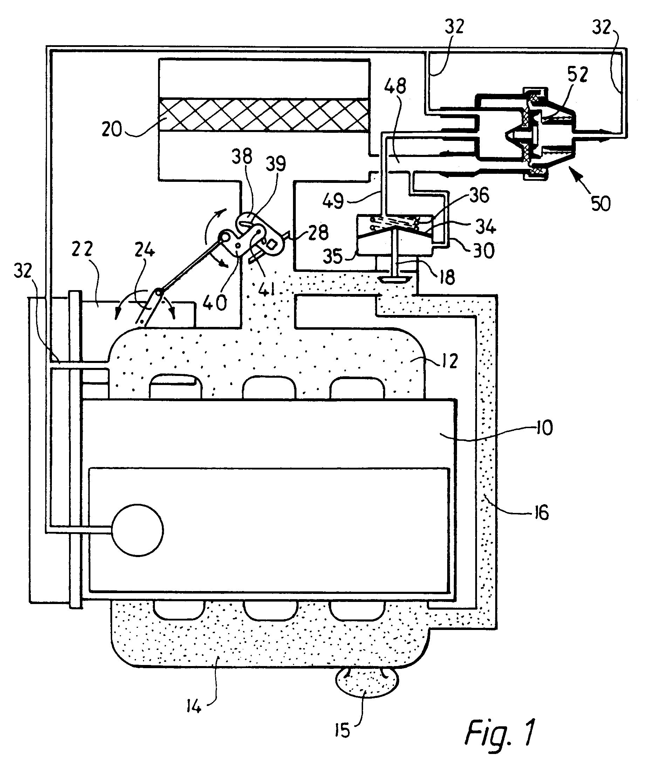

Figure 1 is a schematic illustration of the inlet system of a diesel engine in accordance with the invention;
Figures 2 and 3 illustrate two alternative operating states for a bypass valve; and
Figure 4 illustrates an installation of a bypass valve.

The drawing shows a fuel-injected diesel engine 10 with an air intake manifold 12 and an exhaust manifold 14 with an exhaust pipe 15. A recirculation passage 16 leads between the manifolds 12 and 14 and contains a valve 18 (for example a linearly moveable poppet valve) which controls flow through the passage. Air is introduced into the pipe 12 through an air filter 20. Fuel is supplied to the engine by a fuel pump 22 which has internal mechanical governing, and an input lever 24 on the pump is connected to the accelerator pedal.

In order to relate the position of the EGR valve 18 to the position of the input lever 24, a variable restriction in the form of a butterfly flap 28 is placed upstream of the air intake manifold 12. A pressure drop will occur across the restriction, and the magnitude of this drop will be sensed as the pressure in a pipe 32 downstream of the restriction. This (negative) pressure is applied to one side of a diaphragm 34 in a pressure sensitive control unit 35 which is connected to the EGR valve 18, so that the valve is moved in the opening direction by the pressure, against the biasing force of a light spring 36, and is moved in the closing direction by the spring. An additional pipe 30 upstream of the butterfly 28 and downstream of the air filter 20 is provided so as to compensate for a change in the absolute pressure level as the air filter becomes partially blocked during service.

The setting of the butterfly 28 thus determines the position of the valve 18 at a particular flow rate. The butterfly flap 28 itself is set by the input lever 24 through a cam 38 with a closed cam track 39 which is secured to the butterfly. An actuating link 40 is connected to the input lever 24 and has a follower 41 which follows the cam track 39 and moves the butterfly as the input lever moves.

When the driver puts his foot fully down on the accelerator pedal, the input lever 24 moves the cam 38 so that the butterfly flap 28 lies horizontally in the intake passage and affords a minimum restriction to the air flow. There will be virtually no manifold depression occurring in the pipe 32, and therefore the spring 36 will keep the EGR valve 18 closed. At this stage the engine is likely to be working against a substantial load.

As the driver's foot comes off the accelerator pedal, the input lever 24 will move back and the flap 28 will begin to block the cross section of the intake passage 12. The manifold depression as present in the pipe 32 will increase to a point where it will start to lift the diaphragm 34 against the force of the spring 36. Exhaust gas will therefore be drawn through the passage 16 and into the engine intake.

However when the driver wishes to change gear he takes his foot entirely off the accelerator pedal and as a result the flap 28 will move immediately to the closed position. Because the engine will normally be running at a high speed, a substantial manifold depression will be built up in the pipe 32 and, in the absence of a bypass valve indicated at 50, this will lead to the valve 18 being pulled wide open. The exhaust gas will be drawn through the passage 16 into the engine. Additionally when the driver takes his foot off the accelerator, the fuel pump stops pumping fuel to the engine.

As soon as the gear change is completed, the driver will put his foot back on the accelerator pedal. The first effect of this is that fuel will immediately be pumped into the combustion chambers of the engine which are at this stage filled with a considerable quantity of recirculated exhaust gas. The combination of a large amount of fuel and a large amount of recirculated exhaust gas leads to a poor combustion, and as a result at the end of the gear change uncombusted fuel is emitted from the engine and through the exhaust pipe where it is evident as a puff of smoke at the outer end of the exhaust pipe.

To avoid this happening, a bypass passage 48 is provided which connects the pipe 32 to the intake manifold upstream of the flap 28 and allows the depression in the pipe 32 to be dumped under certain conditions. A bypass valve 50 is fitted in the passage to control the opening and closing of the passage. Under most operating conditions, the valve 50 is held in a closed position by a spring 52 which presses a diaphragm 54 against a valve seat 56. The space above the diaphragm is connected to the pipe 32 and thus to the air intake 12 downstream of the butterfly flap 28. It is important that the cross-sectional area of the passage 32 be smaller than the area of the passage 48 to ensure correct operation of the valve 50.

When an exceptionally high depression (eg greater than 10 kPa) occurs in the intake manifold 12, sufficient force is generated above the diaphragm 54 to overcome the spring 52 and to lift the diaphragm from the seat 56. This results in connection of the pipe 32 to atmosphere. The depression acting on the EGR valve piston 34 immediately drops and the valve 18 is not lifted. Thus, in this extreme condition, no EGR flows and during gear changes, the extremely high manifold depression or vacuum is vented to atmosphere.

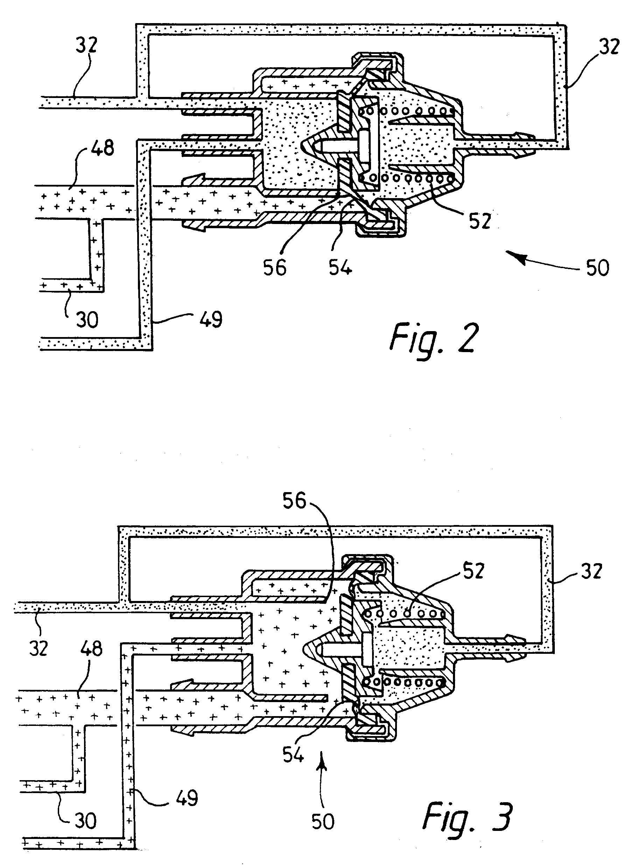

Figure 2 shows the state of the bypass valve 50 during normal running. The diaphragm 54 is held closed on the seat 56 by the spring 52. The passages 32 and 49 are connected to one another through the bypass valve so that intake manifold pressure reaches the upper side of the EGR diaphragm 34. Atmospheric pressure will reach the under side of the diaphragm 34 through the pipe 30. Under this condition, the opening of the EGR valve will respond to the level of manifold depression across the butterfly 28.

Figure 3 shows what happens when there is a large increase in manifold depression. The resulting increased suction in the pipe 32 acts immediately on the right-hand side of the diaphragm 54 and overcomes the force of the spring 52. The diaphragm is rapidly lifted off its seat and this allows communication between the pipe 32 and the larger diameter passage 48. As a result, the manifold depression is dumped and the depression or suction acting above the EGR diaphragm 34 will also be dumped. The result will be that the EGR valve will close virtually instantaneously.

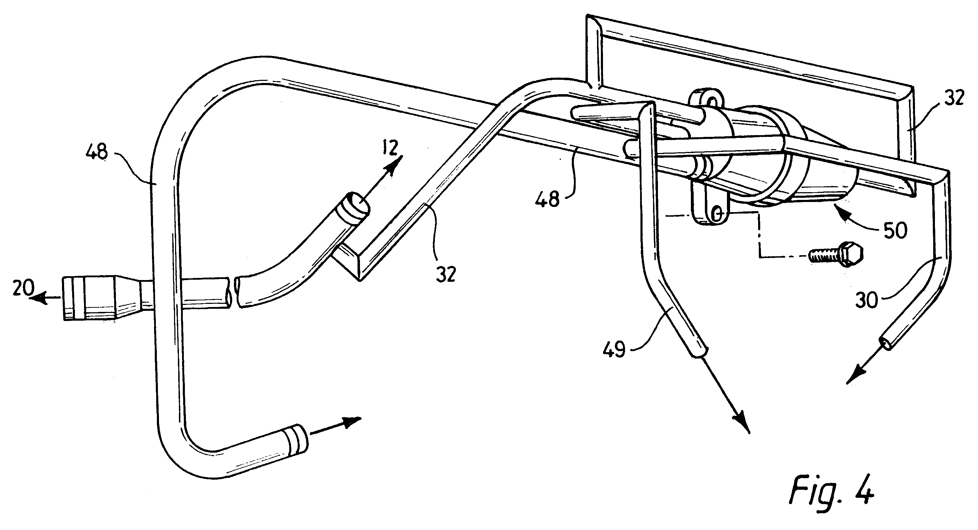

Figure 4 shows the valve 50 formed as a single unit which can be mounted on a convenient surface by means of fastenings 55, and can be connected to the EGR valve 35, to the inlet manifold 12 and to the air cleaner 20 by flexible hoses.

The level of depression at which the bypass valve will open must be set so that it will not open during normal running but will open under the extreme depression produced in this system during gear changes. It should be possible to identify a threshold depression which is above the normal depressions encountered during running and below the extreme depression occurring on gear changes. On a Ford 2.5 York diesel engine, a suitable threshold has been found at 10 kPa.

This invention provides a simple and effective way of preventing the emission of a puff of smoke from the vehicle exhaust pipe on gear changes. The bypass valve 50 has a very quick response time which is necessary in this situation since it is only compensating for a transitory engine state.

## Claims

1. A diesel engine having an exhaust gas recirculation passage (16) and an exhaust gas recirculation valve (18) in the passage, wherein the opening of the exhaust gas recirculation valve is increased with an increase of the depression produced by an adjustable throttle valve (28) located in the air intake to the engine, wherein the depression acts on the EGR valve (18) to increase the opening of the EGR valve as the depression rises, characterised in that the depression also acts on a bypass valve (50) which is mounted in series with the EGR valve (18) and is set so that it is normally closed but will open to allow the depression to bypass the EGR valve so that the EGR valve moves towards its closed position, when the depression is greater than a predetermined value substantially higher than the depression occurring when the engine is idling and the throttle valve is closed.

2. A diesel engine as claimed in Claim 1, characterised in that the bypass valve (50) is a diaphragm valve with the diaphragm (54) being normally spring biased against a valve seat (56) in a bypass passage (32,48).

3. A diesel engine as claimed in Claim 2, characterised in that the bypass passage (32,48) leads from the source of depression to atmosphere.

4. A diesel engine as claimed in any preceding claim, which is a direct injection diesel engine.

## Patentansprüche

1. Dieselmotor mit einem Abgasrückführkanal (16) und einem Abgasrückführventil (18) in dem Kanal, bei welchem die Öffnung des Abgasrückführventils bei einer Vergrößerung des Unterdruckes, der von einem verstellbaren Drosselventil (28), das im Lufteinlaß zum Motor angeordnet ist, erzeugt wird, vergrößert wird, bei welchem der Unterdruck auf das Abgasrückführventil (18) wirkt, um die Öffnung des Abgasrückführventils zu vergrößern, wenn der Unterdruck steigt, dadurch gekennzeichnet, daß der Unterdruck ebenfalls auf ein Abzweigeventil (50) wirkt, welches mit dem Abgasrückführventil (18) in Reihe montiert ist, und so eingestellt ist, daß es normalerweise geschlossen ist, sich aber öffnet, damit der Unterdruck das Abgasrückführventil umkehren kann, so daß das Abgasrückführventil sich zu seiner geschlossenen Position hin bewegt, wenn der Unterdruck größer als ein vorgegebener Wert ist, der wesentlich höher ist als der Unterdruck, der auftritt, wenn der Motor im Leerlauf läuft und das Drosselventil geschlossen ist.

2. Dieselmotor nach Anspruch 1, dadurch gekennzeichnet, daß das Abzweigeventil (50) ein Membranventil mit einer Membran (54) ist, die normalerweise mit einer Feder gegen einen Ventilsitz (56) in einem Abzweigekanal (32,48) vorgespannt ist.

3. Dieselmotor nach Anspruch 2, dadurch gekennzeichnet, daß der Abzweigekanal (32,48) von der Unterdruckquelle in die Atmosphäre führt.

4. Dieselmotor nach einem der vorstehenden Ansprüche, welcher ein Dieselmotor mit direkter Kraftstoffeinspritzung ist.

## Revendications

1. Moteur diesel présentant un conduit de recirulation des gaz d'échappement (16) et une soupape de recirulation des gaz d'échappement (18) dans ledit conduit, dans lequel l'ouverture de la soupape de recirculation des gaz d'échappement augmente lorsqu'augmente la dépression produite par un papillon des gaz (28) réglable placé dans l'admission d'air allant au moteur, dans lequel la dépression agit sur la soupape de recirulation des gaz d'échappement (18) afin d'augmenter l'ouverture de la soupape de recirculation des gaz d'échappement lorsque la dépression augmente, caractérisé en ce que la dépression agit également sur une soupape de dérivation (50) qui est montée en série avec la soupape de recirculation des gaz d'échappement (18) et est réglée de manière à être normalement fermée mais à s'ouvrir pour permettre à la dépression de contourner la soupape de recirculation des gaz d'échappement, de manière à ce que la soupape de recirculation des gaz d'échappement se déplace vers sa position fermée, lorsque la dépression est supérieure à une valeur prédéterminée essentiellement supérieure à la dépression qui se produit lorsque le moteur est au ralenti et que le papillon des gaz est fermé.

2. Moteur diesel selon la revendication 1, caractérisé en ce que la soupape de dérivation (50) est une soupape à diaphragme dont le diaphragme (54) est normalement incliné au moyen d'un ressort contre un siège de soupape (56) dans un conduit de dérivation (32, 48).

3. Moteur diesel selon la revendication 2, caractérisé en ce que le conduit de dérivation va de la source de dépression à l'atmosphère.

4. Moteur diesel selon l'une des revendications précédentes, qui est un moteur diesel à injection directe.
